# EUROPEAN PATENT SPECIFICATION

(11) **EP 3 736 142 B1**
(45) Date of publication and mention of the grant of the patent: **01.11.2023**
(21) Application number: 20168934.6
(22) Date of filing: 09.04.2020
(51) Int. Cl.: B60C 15/00, B60C 5/14, B60C 15/06

(54) **MOTORCYCLE TIRE**
MOTORRADREIFEN
PNEUMATIQUE DE MOTO

(30) Priority: 10.05.2019 JP 2019089791
(43) Date of publication of application: 11.11.2020
(73) Proprietor: Sumitomo Rubber Industries, Ltd., Kobe-shi, Hyogo 651-0072 (JP)
(72) Inventor: OTANI, Masafumi, Kobe-shi, Hyogo 651-0072 (JP)
(74) Representative: TBK

(56) References cited:
- EP-A1- 3 366 495
- EP-A1- 3 421 268

## Description

### BACKGROUND OF THE INVENTION

### Field of the Invention

The present invention relates to a motorcycle tire.

### Description of the Background Art

To date, attention has been focused on improving stiffness feeling provided by a motorcycle tire that includes a tread portion, sidewall portions, and bead portions particularly under application of traction. For example, Japanese Laid-Open Patent Publication No. 2018-135023 suggests a motorcycle tire that allows the sidewall having a two-layer structure to improve stiffness feeling under application of traction.

However, in a case where, for example, the motorcycle tire disclosed in Japanese Laid-Open Patent Publication No. 2018-135023 is used for a rear wheel, when high traction is applied, the bead portion is under a heavy load and may be deformed. Such deformation of the bead portion may cause stiffness feeling provided by the motorcycle tire to be degraded. In the motorcycle tire disclosed in Japanese Laid-Open Patent Publication No. 2018-135023, deformation of the bead portion can be reduced by stiffness of the bead portion being increased. However, in this case, a problem arises that impact or vibration absorption is degraded.

EP 3 421 268 A1 discloses a tire for a two-wheeled automotive vehicle. In particular, in a tire, a band is disposed between a tread and a carcass in a radial direction, and is layered over the carcass. A first carcass ply of the carcass has a main portion and turned-up portions. A second carcass ply of the carcass is disposed outward of the main portion of the first carcass ply in the radial direction, and is extended on and between one of the beads and the other of the beads. Ends of the second carcass ply are disposed between the beads and the turned-up portions, respectively, on outer side in the axial direction. Ends of the turned-up portions are disposed between the main portion and the band. The turned-up portions and the band are layered over each other.

The present invention has been made in view of such circumstances, and a main object of the present invention is to provide a motorcycle tire that can allow achievement of both absorption and stiffness feeling under application of traction.

### SUMMARY OF THE INVENTION

The present invention is directed to a motorcycle tire that includes a carcass and an inner liner. The carcass has at least one carcass ply that includes a body portion extending along and from a tread portion through sidewall portions to bead cores of bead portions, and turned-up portions that connect to the body portion and are turned up around the bead cores from an inner side toward an outer side in a tire axial direction. The inner liner includes an inner-liner body portion disposed on a tire inner cavity side of the body portion, and inner-liner outer portions disposed outward of the turned-up portions in the tire axial direction.

In the motorcycle tire of the present invention, the inner-liner outer portions preferably connect to the inner-liner body portion.

In the motorcycle tire of the present invention, each sidewall portion preferably includes at least one layer of sidewall rubber on the outer side in the tire axial direction, and the inner-liner outer portions are preferably disposed between the sidewall rubber and the turned-up portions.

In the motorcycle tire of the present invention, the sidewall rubber preferably includes first sidewall rubber disposed on an innermost side in a tire radial direction, and second sidewall rubber disposed outward of the first sidewall rubber in the tire radial direction, and an outer end of each inner-liner outer portion in the tire radial direction is preferably disposed tire-radially inward of an outer end of the first sidewall rubber in the tire radial direction.

In the motorcycle tire of the present invention, the outer end of each inner-liner outer portion in the tire radial direction is preferably disposed tire-radially outward of an inner end of the second sidewall rubber in the tire radial direction.

In the motorcycle tire of the present invention, the bead portions preferably include chafers disposed at portions that come into contact with a rim, and the inner-liner outer portions are preferably disposed between the chafers and the turned-up portions.

In the motorcycle tire of the present invention, the chafers preferably include at least one of canvas and hard rubber.

In the motorcycle tire of the present invention, the outer end of each inner-liner outer portion in the tire radial direction is preferably disposed tire-radially inward of an outer end of a corresponding one of the chafers in the tire radial direction.

In the motorcycle tire of the present invention, the outer end of each inner-liner outer portion in the tire radial direction is preferably disposed tire-radially outward of an outer side surface of a corresponding one of the bead cores in the tire radial direction.

In the motorcycle tire of the present invention, the outer end of each inner-liner outer portion in the tire radial direction is preferably disposed tire-radially inward of a maximum width portion of the carcass in the tire axial direction.

In the motorcycle tire of the present invention, the inner liner is preferably disposed along the carcass ply.

In the motorcycle tire according to the present invention, the inner liner includes the inner-liner body portion disposed on the tire inner cavity side of the body portion, and the inner-liner outer portions disposed outward of the turned-up portions in the tire axial direction.

The inner-liner outer portions having such a structure reinforce the bead portions and allow improvement of stiffness feeling provided by the motorcycle tire under application of traction. Furthermore, the inner-liner outer portions and the inner-liner body portion are included in the same inner liner. Therefore, stiffness of the bead portions is inhibited from becoming excessively high, and preferable absorption can be maintained. Accordingly, the motorcycle tire of the present invention allows achievement of both impact and vibration absorption, and stiffness feeling under application of traction.

### BRIEF DESCRIPTION OF THE DRAWINGS

FIG. 1 is a cross-sectional view of a motorcycle tire according to the present embodiment; and
FIG. 2 is an enlarged cross-sectional view of a sidewall portion and a bead portion.

### DESCRIPTION OF THE PREFERRED EMBODIMENTS

An embodiment of the present invention will be described below with reference to the drawings.

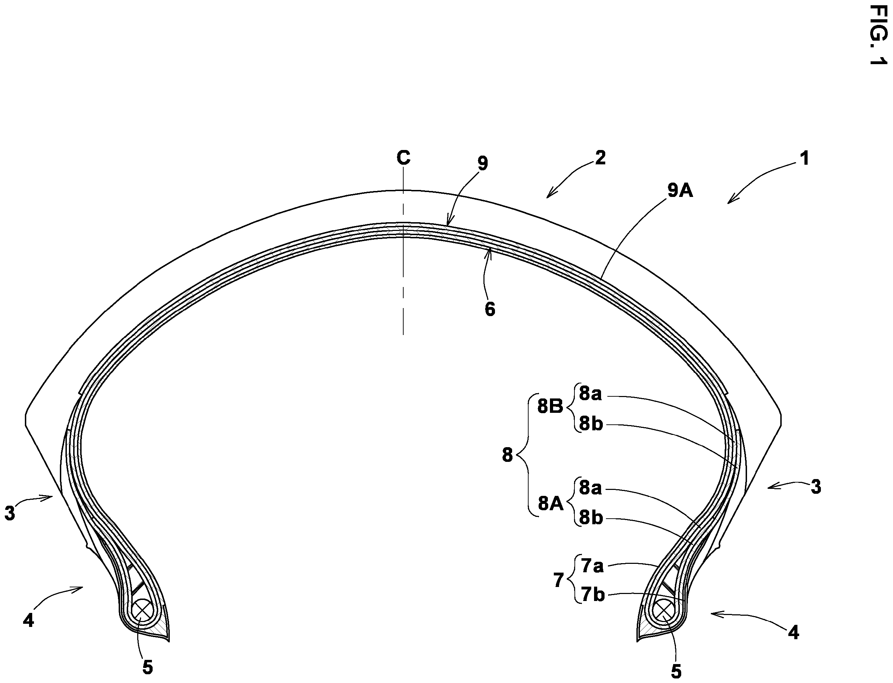

FIG. 1 is a tire meridian cross-sectional view of a motorcycle tire 1 (hereinafter, may be simply referred to as "tire 1"), of the present embodiment, in a normal state. In the description herein, the "normal state" represents a state in which the tire 1 is mounted on a normal rim, adjusted so as to have a normal internal pressure, and is under no load. In the description herein, unless otherwise specified, the dimensions of the components of the tire 1 represent values measured in the normal state.

The "normal rim" represents a rim that is defined by a standard, in a standard system including the standard with which the tire 1 complies, for each tire, and is, for example, the "standard rim" in the JATMA standard, the "Design Rim" in the TRA standard, or the "Measuring Rim" in the ETRTO standard.

The "normal internal pressure" represents an air pressure that is defined by a standard, in a standard system including the standard with which the tire 1 complies, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

As shown in FIG. 1, in the present embodiment, the tire 1 includes a carcass 6 that extends along and from a tread portion 2 through sidewall portions 3 to bead cores 5 of bead portions 4, and an inner liner 7 disposed at least on a tire inner cavity side of the carcass 6.

The carcass 6 has, for example, at least one carcass ply 8. The carcass ply 8 preferably includes a body portion 8a that extends along and from the tread portion 2 through the sidewall portions 3 to the bead cores 5 of the bead portions 4, and turned-up portions 8b that connect to the body portion 8a and are turned up around the bead cores 5 from the inner side toward the outer side in the tire axial direction.

In the present embodiment, the inner liner 7 includes an inner-liner body portion 7a disposed on the tire inner cavity side of the body portion 8a, and the inner-liner outer portions 7b disposed outward of the turned-up portions 8b in the tire axial direction. The inner-liner outer portions 7b having such a structure reinforce the bead portions 4 and allow improvement of stiffness feeling provided by the tire 1 under application of traction. Furthermore, the inner-liner outer portions 7b and the inner-liner body portion 7a are included in the same inner liner 7. Therefore, stiffness of the bead portions 4 is inhibited from becoming excessively high, and the tire 1 can maintain preferable absorption. Therefore, the tire 1 of the present embodiment can allow achievement of both impact and vibration absorption, and stiffness feeling under application of traction.

In a more preferable mode, the tire 1 includes a belt layer 9 disposed outward of the carcass 6 in the tire radial direction and inward of the tread portion 2 in the tire radial direction. The belt layer 9 has, for example, at least one belt ply 9A. The belt ply 9A includes, for example, a plurality of belt cords that extend in the tire circumferential direction. The belt cord is formed from, for example, a steel wire. The belt layer 9 having such a structure allows stiffness of the tread portion 2 to be improved.

In the present embodiment, the carcass ply 8 includes a first carcass ply 8A disposed on the inner liner 7 side, and a second carcass ply 8B disposed on the belt ply 9A side. Each of the first carcass ply 8A and the second carcass ply 8B preferably includes the body portion 8a and the turned-up portions 8b.

The carcass ply 8 includes, for example, a plurality of carcass cords that are inclined relative to the tire circumferential direction. The carcass cord is formed from, for example, a steel wire. In the present embodiment, the carcass cords of the first carcass ply 8A are inclined in the direction opposite to the direction in which the carcass cords of the second carcass ply 8B are inclined. The carcass ply 8 having such a structure can allow the first carcass ply 8A and the second carcass ply 8B to improve stiffness of the tread portion 2 in conjunction with each other.

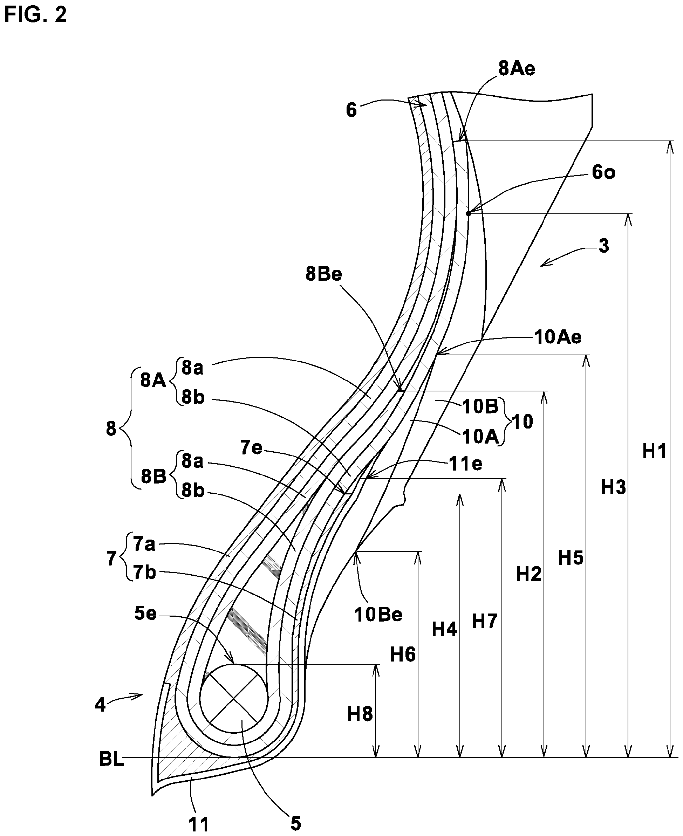

FIG. 2 is an enlarged cross-sectional view of the sidewall portion 3 and the bead portion 4. As shown in FIG. 2, an outer end 8Ae, in the tire radial direction, of the turned-up portion 8b of the first carcass ply 8A is preferably disposed tire-radially outward of an outer end 8Be, in the tire radial direction, of the turned-up portion 8b of the second carcass ply 8B.

Therefore, in the present embodiment, a height H1 of the outer end 8Ae of the first carcass ply 8A from a bead base line BL is greater than a height H2 of the outer end 8Be of the second carcass ply 8B from the bead base line BL. The carcass ply 8 having such a structure allows damage originating from the outer ends 8Ae and 8Be to be inhibited since the outer end 8Ae of the first carcass ply 8A and the outer end 8Be of the second carcass ply 8B are at different height positions, thereby improving durability of the tire 1.

The first carcass ply 8A preferably extends to a portion tire-radially outward of a maximum width portion 6o, in the tire axial direction, of the carcass 6. Therefore, in the present embodiment, the height H1 of the outer end 8Ae of the first carcass ply 8A is greater than a height H3 of the maximum width portion 6o of the carcass 6 from the bead base line BL. The first carcass ply 8A having such a structure reinforces the sidewall portion 3 and can allow improvement of stiffness feeling provided by the tire 1 under application of traction.

The height H3 of the maximum width portion 6o of the carcass 6 is preferably 30 to 40 mm. When the height H3 of the maximum width portion 6o is less than 30 mm, stiffness of the sidewall portion 3 becomes excessively high, and the tire 1 may have its absorption degraded greatly. When the height H3 of the maximum width portion 6o is greater than 40 mm, stiffness of the sidewall portion 3 may become insufficient.

An outer end 7e, in the tire radial direction, of the inner-liner outer portion 7b of the inner liner 7 is preferably disposed tire-radially inward of the maximum width portion 6o of the carcass 6. Therefore, in the present embodiment, a height H4 of the outer end 7e of the inner-liner outer portion 7b from the bead base line BL is less than the height H3 of the maximum width portion 6o of the carcass 6. The inner-liner outer portion 7b having such a structure inhibits stiffness of the sidewall portion 3 from becoming excessively high, and allows the tire 1 to maintain preferable absorption.

In the present embodiment, the sidewall portion 3 includes at least one layer of sidewall rubber 10 on the outer side in the tire axial direction. The sidewall rubber 10 having such a structure reinforces the sidewall portion 3 and allows improvement of stiffness feeling provided by the tire 1 under application of traction.

In the present embodiment, the sidewall rubber 10 includes first sidewall rubber 10A disposed on the innermost side in the tire radial direction, and second sidewall rubber 10B disposed outward of the first sidewall rubber 10A in the tire radial direction. The sidewall rubber 10 having such a structure allows the first sidewall rubber 10A and the second sidewall rubber 10B to improve stiffness of the sidewall portion 3 in conjunction with each other.

An outer end 10Ae of the first sidewall rubber 10A in the tire radial direction is preferably disposed tire-radially outward of an inner end 10Be of the second sidewall rubber 10B in the tire radial direction. Therefore, in the present embodiment, a height H5 of the outer end 10Ae of the first sidewall rubber 10A from the bead base line BL is greater than a height H6 of the inner end 10Be of the second sidewall rubber 10B from the bead base line BL. The sidewall rubber 10 having such a structure has a portion in which the first sidewall rubber 10A and the second sidewall rubber 10B overlap each other, and, therefore, stiffness of the sidewall portion 3 can be further improved.

The outer end 10Ae of the first sidewall rubber 10A is preferably disposed tire-radially inward of the maximum width portion 6o of the carcass 6. Therefore, in the present embodiment, the height H5 of the outer end 10Ae of the first sidewall rubber 10A is less than the height H3 of the maximum width portion 6o of the carcass 6. The sidewall rubber 10 having such a structure inhibits stiffness of the sidewall portion 3 from becoming excessively high, and allows the tire 1 to maintain preferable absorption.

The height H5 of the outer end 10Ae of the first sidewall rubber 10A is preferably 25 to 35 mm. When the height H5 of the outer end 10Ae of the first sidewall rubber 10A is less than 25 mm, the effect of improving stiffness of the sidewall portion 3 may be reduced. When the height H5 of the outer end 10Ae of the first sidewall rubber 10A is greater than 35 mm, stiffness of the sidewall portion 3 becomes excessively high, and the tire 1 may have its absorption reduced greatly.

In the present embodiment, the inner-liner outer portion 7b of the inner liner 7 is disposed between the sidewall rubber 10 and the turned-up portion 8b of the carcass ply 8. The inner-liner outer portion 7b having such a structure reinforces a portion from the bead portion 4 to the lower portion of the sidewall portion 3, and allows stiffness feeling provided by the tire 1 under application of traction to be improved.

The outer end 7e of the inner-liner outer portion 7b is preferably disposed tire-radially inward of the outer end 10Ae of the first sidewall rubber 10A. Therefore, in the present embodiment, the height H4 of the outer end 7e of the inner-liner outer portion 7b is less than the height H5 of the outer end 10Ae of the first sidewall rubber 10A. The inner-liner outer portion 7b having such a structure inhibits stiffness of the sidewall portion 3 from becoming excessively high, and allows the tire 1 to maintain preferable absorption.

The outer end 7e of the inner-liner outer portion 7b is preferably disposed tire-radially outward of the inner end 10Be of the second sidewall rubber 10B. Therefore, in the present embodiment, the height H4 of the outer end 7e of the inner-liner outer portion 7b is greater than the height H6 of the inner end 10Be of the second sidewall rubber 10B. The inner-liner outer portion 7b having such a structure allows stiffness of the bead portion 4 to be assuredly improved.

In the inner liner 7 of the present embodiment, the inner-liner outer portions 7b connect to the inner-liner body portion 7a. The inner liner 7 having such a structure allows the inner-liner body portion 7a and the inner-liner outer portions 7b to be integrally adhered, whereby productivity of the tire 1 can be improved.

The inner liner 7 is preferably disposed along the carcass ply 8. In the present embodiment, the inner-liner body portion 7a of the inner liner 7 is disposed along the body portion 8a of the carcass ply 8. In the present embodiment, the inner-liner outer portion 7b of the inner liner 7 is disposed along the turned-up portion 8b of the carcass ply 8. Therefore, in the present embodiment, the inner liner 7 is turned up around the bead cores 5. The inner liner 7 having such a structure can be disposed so as to overlap the carcass ply 8 when the tire 1 is produced, whereby productivity of the tire 1 can be further improved.

The inner liner 7 may include, for example, a first layer (not shown) having an excellent airtightness and a second layer (not shown) having an excellent adhesiveness to the carcass ply 8. In this case, in the inner-liner body portion 7a, the first layer is preferably disposed on the tire inner cavity side. The inner-liner outer portion 7b may be formed only from the second layer. The inner liner 7 having such a structure has a preferable adhesiveness to the carcass ply 8, and allows productivity of the tire 1 to be improved.

In the present embodiment, the bead portions 4 include chafers 11 disposed at portions that come into contact with a rim (not shown). The chafer 11 having such a structure reinforces the bead portion 4 and allows stiffness of the bead portion 4 to be improved.

The chafer 11 includes, for example, at least one of canvas and hard rubber. The chafer 11 having such a structure has excellent wear resistance, reduces wear at the portions that come into contact with the rim, and improves durability of the tire 1.

In the present embodiment, the inner-liner outer portion 7b of the inner liner 7 is disposed between the chafer 11 and the turned-up portion 8b of the carcass ply 8. The inner-liner outer portion 7b having such a structure can improve stiffness of the bead portion 4 in conjunction with the chafer 11.

The outer end 7e of the inner-liner outer portion 7b is preferably disposed tire-radially inward of an outer end 11e of the chafer 11 in the tire radial direction. Therefore, in the present embodiment, the height H4 of the outer end 7e of the inner-liner outer portion 7b is less than a height H7 of the outer end 11e of the chafer 11 from the bead base line BL. The inner-liner outer portion 7b having such a structure inhibits stiffness of the sidewall portion 3 from becoming excessively high, and allows the tire 1 to maintain preferable absorption.

The outer end 7e of the inner-liner outer portion 7b is preferably disposed tire-radially outward of an outer side surface 5e of the bead core 5 in the tire radial direction. Therefore, in the present embodiment, the height H4 of the outer end 7e of the inner-liner outer portion 7b is greater than a height H8 of the outer side surface 5e of the bead core 5 from the bead base line BL. The inner-liner outer portion 7b having such a structure allows stiffness of the bead portion 4 to be assuredly improved.

The height H4 of the outer end 7e of the inner-liner outer portion 7b is preferably 10 to 30 mm. When the height H4 of the outer end 7e of the inner-liner outer portion 7b is less than 10 mm, the effect of improving stiffness of the bead portion 4 may be reduced. When the height H4 of the outer end 7e of the inner-liner outer portion 7b is greater than 30 mm, stiffness of the sidewall portion 3 becomes excessively high, and the tire 1 may have its absorption reduced greatly.

Although the preferred embodiments of the present invention have been described above in detail, the present invention is not limited to the above-described embodiments, and various modifications can be made to implement the present invention as defined in the claims.

### [Examples]

A motorcycle tire having the basic structure shown in FIG. 1 was produced as a sample tire for examples according to the specifications indicated in Table 1. For comparative example, a motorcycle tire having no inner-liner outer portion was produced as a sample tire according to the specifications indicated in Table 1. The sample tires were mounted to all wheels of a test vehicle, and absorption and stiffness feeling under application of traction were tested.

The specifications common to the sample tires and the test method were as follows.
Test vehicle: large-sized motorcycle
Size of tire for front wheel: 120/70ZR17
Size of tire for rear wheel: 200/55ZR17
Air pressure for front wheel: 250 kPa
Air pressure for rear wheel: 290 kPa
Height H3 of maximum width portion of carcass: 35 mm
Height H5 of outer end of first sidewall rubber: 27 mm

### <Stiffness feeling under application of traction>

A test rider drove the test vehicle having the sample tires mounted thereto, on a dry paved road surface in a test course. The test rider made sensory evaluation for stiffness feeling under application of traction at the corner of the test course. The results are indicated as indexes with the index of comparative example being 100. The greater the value is, the more excellent stiffness feeling under application of tractions is.

### <Absorption>

A test rider drove the test vehicle having the sample tires mounted thereto, on a dry paved road surface in a test course, and made sensory evaluation for impact and vibration absorption. The results are indicated as indexes with the index of comparative example being 100. The greater the value is, the more excellent the absorption is.

The test results are indicated in Table 1.

**[Table 1]**

| | Comparative example | Example 1 | Example 2 | Example 3 |
|---|---|---|---|---|
| Height H4 of inner-liner outer portion | 0 | 10 | 20 | 25 |
| Stiffness feeling (index) under application of traction | 100 | 105 | 110 | 113 |
| Absorption (index) | 100 | 100 | 97 | 95 |

According to the test results, it was confirmed that, while the motorcycle tires of the examples maintained absorption equivalent to absorption in the comparative example, stiffness feeling under application of traction was improved in the examples, and both absorption and stiffness feeling under application of traction were achieved in the examples.

Provided is a motorcycle tire that allows achievement of both absorption and stiffness feeling under application of traction.

A motorcycle tire 1 includes a carcass 6 and an inner liner 7. The carcass 6 has at least one carcass ply 8 that includes a body portion 8a extending along and from a tread portion 2 through sidewall portions 3 to bead cores 5 of bead portions 4, and turned-up portions 8b that connect to the body portion 8a and are turned up around the bead cores 5 from an inner side toward an outer side in a tire axial direction. The inner liner 7 includes an inner-liner body portion 7a disposed on a tire inner cavity side of the body portion 8a, and inner-liner outer portions 7b disposed outward of the turned-up portions 8b in the tire axial direction.

## Claims

1. A motorcycle tire (1) comprising:
a carcass (6); and
an inner liner (7), wherein
the carcass (6) has at least one carcass ply (8) that includes a body portion (8a) extending along and from a tread portion (2) through sidewall portions (3) to bead cores (5) of bead portions (4), and turned-up portions (8b) that connect to the body portion (8a) and are turned up around the bead cores (5) from an inner side toward an outer side in a tire axial direction, and
the inner liner (7) includes an inner-liner body portion (7a) disposed on a tire inner cavity side of the body portion (8a),
**characterized in that**
the inner liner (7) further includes inner-liner outer portions (7b) disposed outward of the turned-up portions (8b) in the tire axial direction.

2. The motorcycle tire (1) according to claim 1, wherein the inner-liner outer portions (7b) connect to the inner-liner body portion (7a).

3. The motorcycle tire (1) according to claim 1 or 2, wherein
each sidewall portion (3) includes at least one layer of sidewall rubber (10) on the outer side in the tire axial direction, and
the inner-liner outer portions (7b) are disposed between the sidewall rubber (10) and the turned-up portions (8b).

4. The motorcycle tire (1) according to claim 3, wherein
the sidewall rubber (10) includes first sidewall rubber (10A) disposed on an innermost side in a tire radial direction, and second sidewall rubber (10B) disposed outward of the first sidewall rubber (10A) in the tire radial direction, and
an outer end (7e) of each inner-liner outer portion (7b) in the tire radial direction is disposed tire-radially inward of an outer end (10Ae) of the first sidewall rubber (10A) in the tire radial direction.

5. The motorcycle tire (1) according to claim 4, wherein the outer end (7e) of each inner-liner outer portion (7b) in the tire radial direction is disposed tire-radially outward of an inner end (lOBe) of the second sidewall rubber (10B) in the tire radial direction.

6. The motorcycle tire (1) according to any one of claims 1 to 5, wherein
the bead portions (4) include chafers (11) disposed at portions that come into contact with a rim, and
the inner-liner outer portions (7b) are disposed between the chafers (11) and the turned-up portions (8b).

7. The motorcycle tire (1) according to claim 6, wherein the chafers (11) include at least one of canvas and hard rubber.

8. The motorcycle tire (1) according to claim 6 or 7, wherein the outer end (7e) of each inner-liner outer portion (7b) in the tire radial direction is disposed tire-radially inward of an outer end (11e) of a corresponding one of the chafers (11) in the tire radial direction.

9. The motorcycle tire (1) according to any one of claims 1 to 8, wherein the outer end (7e) of each inner-liner outer portion (7b) in the tire radial direction is disposed tire-radially outward of an outer side surface (5e) of a corresponding one of the bead cores (5) in the tire radial direction.

10. The motorcycle tire (1) according to any one of claims 1 to 9, wherein the outer end (7e) of each inner-liner outer portion (7b) in the tire radial direction is disposed tire-radially inward of a maximum axial width portion (6o) of the carcass (6).

11. The motorcycle tire (1) according to any one of claims 1 to 10, wherein the inner liner (7) is disposed along the carcass ply (8).

## Patentansprüche

1. Motorradreifen (1), mit:
einer Karkasse (6); und
einer Innenauskleidung (7), wobei
die Karkasse (6) mindestens eine Karkassenlage (8) aufweist, die einen Körperabschnitt (8a), der sich entlang und von einem Laufflächenabschnitt (2) durch Seitenwandabschnitte (3) zu Wulstkernen (5) von Wulstabschnitten (4) erstreckt, und umgeschlagene Abschnitte (8b) hat, die mit dem Körperabschnitt (8a) verbunden und um die Wulstkerne (5) von einer inneren Seite zu einer äußeren Seite in einer axialen Richtung des Reifens umgeschlagen sind, und
die Innenauskleidung (7) einen Innenauskleidungskörperabschnitt (7a) aufweist, der auf einer Reifeninnenhohlraumseite des Körperabschnitts (8a) angeordnet ist,
**dadurch gekennzeichnet, dass**
die Innenauskleidung (7) ferner äußere Innenauskleidungsabschnitte (7b) hat, die in der axialen Richtung des Reifens außerhalb der umgeschlagenen Abschnitte (8b) angeordnet sind.

2. Motorradreifen (1) nach Anspruch 1, wobei die äußeren Innenauskleidungsabschnitte (7b) mit dem Innenauskleidungskörperabschnitt (7a) verbunden sind.

3. Motorradreifen (1) nach Anspruch 1 oder 2, wobei
jeder Seitenwandabschnitt (3) mindestens eine Schicht aus Seitenwandkautschuk (10) auf der Außenseite in der axialen Richtung des Reifens aufweist, und
die äußeren Innenauskleidungsabschnitte (7b) zwischen dem Seitenwandkautschuk (10) und den umgeschlagenen Abschnitten (8b) angeordnet sind.

4. Motorradreifen (1) nach Anspruch 3, wobei
der Seitenwandkautschuk (10) einen ersten Seitenwandkautschuk (10A) hat, der auf einer innersten Seite in einer radialen Richtung des Reifens angeordnet ist, und einen zweiten Seitenwandkautschuk (10B), der außerhalb des ersten Seitenwandkautschuks (10A) in der radialen Richtung des Reifens angeordnet ist, und
ein äußeres Ende (7e) jedes äußeren Innenauskleidungsabschnitts (7b) in der radialen Richtung des Reifens reifenradial innerhalb von einem äußeren Ende (10Ae) des ersten Seitenwandkautschuks (10A) in der radialen Richtung des Reifens angeordnet ist.

5. Motorradreifen (1) nach Anspruch 4, wobei das äußere Ende (7e) jedes äußeren Innenauskleidungsabschnitts (7b) in der radialen Richtung des Reifens reifenradial außerhalb eines inneren Endes (10Be) des zweiten Seitenwandkautschuks (10B) in der radialen Richtung des Reifens angeordnet ist.

6. Motorradreifen (1) nach einem der Ansprüche 1 bis 5, wobei
die Wulstabschnitte (4) Wulstbänder (11) aufweisen, die an Abschnitten angeordnet sind, die in Kontakt mit einer Felge kommen, und
die äußeren Innenauskleidungsabschnitte (7b) zwischen den Wulstbändern (11) und den umgeschlagenen Abschnitten (8b) angeordnet sind.

7. Motorradreifen (1) nach Anspruch 6, wobei die Wulstbänder (11) mindestens eines aus Segeltuch und Hartkautschuk haben.

8. Motorradreifen (1) nach Anspruch 6 oder 7, wobei das äußere Ende (7e) jedes äußeren Innenauskleidungsabschnitts (7b) in der radialen Richtung des Reifens reifenradial innerhalb eines äußeren Endes (11e) eines entsprechenden der Wulstbänder (11) in der radialen Richtung des Reifens angeordnet ist.

9. Motorradreifen (1) nach einem der Ansprüche 1 bis 8, wobei das äußere Ende (7e) jedes äußeren Innenauskleidungsabschnitts (7b) in der radialen Richtung des Reifens reifenradial außerhalb einer äußeren Seitenfläche (5e) eines entsprechenden der Wulstkerne (5) in der radialen Richtung des Reifens angeordnet ist.

10. Motorradreifen (1) nach einem der Ansprüche 1 bis 9, wobei das äußere Ende (7e) jedes äußeren Innenauskleidungsabschnittes (7b) in der radialen Richtung des Reifens reifenradial innerhalb eines Abschnitts (6o) maximaler axialer Breite der Karkasse (6) angeordnet ist.

11. Motorradreifen (1) nach einem der Ansprüche 1 bis 10, wobei der Innenauskleidungsabschnitt (7) entlang der Karkassenlage (8) angeordnet ist.

## Revendications

1. Pneu pour motocycle (1), comprenant :
une carcasse (6) ; et
un revêtement intérieur (7), dans lequel
la carcasse (6) a au moins un pli de carcasse (8) qui inclut une partie corps (8a) s'étendant le long d'une partie bande de roulement (2), et depuis cette dernière, à travers des parties parois latérales (3), jusqu'à des tringles de talon (5) de parties talons (4), et des parties retournées (8b) qui se relient à la partie corps (8a) et sont retournées autour des tringles de talon (5), depuis un côté intérieur vers un côté extérieur, dans une direction axiale de pneu, et
le revêtement intérieur (7) inclut une partie corps de revêtement intérieur (7a) disposée sur un côté cavité intérieure de pneu de la partie corps (8a),
**caractérisé en ce que**
le revêtement intérieur (7) inclut en outre des parties extérieures de revêtement intérieur (7b) disposées vers l'extérieur des parties retournées (8b), dans la direction axiale de pneu.

2. Pneu pour motocycle (1) selon la revendication 1, dans lequel les parties extérieures de revêtement intérieur (7b) se relient à la partie corps de revêtement intérieur (7a).

3. Pneu pour motocycle (1) selon la revendication 1 ou 2, dans lequel
chaque partie paroi latérale (3) inclut au moins une couche de caoutchouc de paroi latérale (10) sur le côté extérieur dans la direction axiale de pneu, et
les parties extérieures de revêtement intérieur (7b) sont disposées entre le caoutchouc de paroi latérale (10) et les parties retournées (8b).

4. Pneu pour motocycle (1) selon la revendication 3, dans lequel
le caoutchouc de paroi latérale (10) inclut un premier caoutchouc de paroi latérale (10A) disposé sur un côté le plus intérieur, dans une direction radiale de pneu, et un second caoutchouc de paroi latérale (10B) disposé vers l'extérieur du premier caoutchouc de paroi latérale (10A), dans la direction radiale de pneu, et
une extrémité extérieure (7e) de chaque partie extérieure de revêtement intérieur (7b), dans la direction radiale de pneu, est disposée radialement vers l'intérieur, en ce qui concerne le pneu, d'une extrémité extérieure (10Ae) du premier caoutchouc de paroi latérale (10A) dans la direction radiale de pneu.

5. Pneu pour motocycle (1) selon la revendication 4, dans lequel l'extrémité extérieure (7e) de chaque partie extérieure de revêtement intérieur (7b) dans la direction radiale de pneu est disposée radialement vers l'extérieur, en ce qui concerne le pneu, d'une extrémité intérieure (10Be) du second caoutchouc de paroi latérale (10B) dans la direction radiale de pneu.

6. Pneu pour motocycle (1) selon l'une quelconque des revendications 1 à 5, dans lequel
les parties talons (4) incluent des bandelettes (11) disposées à des parties qui entrent en contact avec une jante, et
les parties extérieures de revêtement intérieur (7b) sont disposées entre les bandelettes (11) et les parties retournées (8b).

7. Pneu pour motocycle (1) selon la revendication 6, dans lequel les bandelettes (11) incluent au moins un de toile et de caoutchouc dur.

8. Pneu pour motocycle (1) selon la revendication 6 ou 7, dans lequel l'extrémité extérieure (7e) de chaque partie extérieure de revêtement intérieur (7b) dans la direction radiale de pneu est disposée radialement vers l'intérieur, en ce qui concerne le pneu, d'une extrémité extérieure (11e) d'une correspondante des bandelettes (11) dans la direction radiale de pneu.

9. Pneu pour motocycle (1) selon l'une quelconque des revendications 1 à 8, dans lequel l'extrémité extérieure (7e) de chaque partie extérieure de revêtement intérieur (7b) dans la direction radiale de pneu est disposée radialement vers l'extérieur, en ce qui concerne le pneu, d'une surface latérale extérieure (5e) d'une correspondante des tringles de talon (5) dans la direction radiale de pneu.

10. Pneu pour motocycle (1) selon l'une quelconque des revendications 1 à 9, dans lequel l'extrémité extérieure (7e) de chaque partie extérieure de revêtement intérieur (7b) dans la direction radiale de pneu est disposée radialement vers l'intérieur, en ce qui concerne le pneu, d'une partie de largeur axiale maximum (60) de la carcasse (6).

11. Pneu pour motocycle (1) selon l'une quelconque des revendications 1 à 10, dans lequel le revêtement intérieur (7) est disposé le long du pli de carcasse (8).
